# EUROPEAN PATENT APPLICATION

(11) **EP 4 498 342 A1**
(43) Date of publication of application: **29.01.2025**
(21) Application number: 24190924.1
(22) Date of filing: 25.07.2024
(51) Int. Cl.: G07F 7/06, B25J 19/00, B65C 1/02, G09F 3/20, B65D 25/20

(54) **CARD INSERTION SYSTEM AND CARD REMOVAL SYSTEM**

(30) Priority: 26.07.2023 JP 2023121645
(71) Applicant: DENSO WAVE INCORPORATED, Chita-gun, Aichi-pref. 470-2297 (JP); DENSO CORPORATION, Aichi-pref. 448-8661 (JP)
(72) Inventor: TAKEUCHI, Tomonori, Kariya-city, Aichi-pref., 448-8661 (JP); AOKI, Akira, Chita-gun, Aichi-pref., 470-2297 (JP)
(74) Representative: Winter, Brandl - Partnerschaft mbB

(57) **Abstract**

A conveying system (10) introduced into a factory conveying process has a robot (11) and a hand 30. The hand (30) has a card chucking device (41) that can hold a card (CA1) in an interspace (44) between plates (42, 43). The card (CA1) is inserted into an interspace formed between a side plate (86) of a returnable box (80) and the card holder on the side plate (86). In this insertion, with the tip portion (43a) of the lower plate (43) facing the specific part, which is located on the upper side of the entrance space of the card holder on the side plate 86, the hand (30) is from the front position of the side plate (86) toward the specific part. When the lower plate (43) contacts the side plate (86), the posture of the robot body is controlled such that the tip portion (43a) of the lower plate (43) is displaced downward along the side plate (86) and faces downward.

## Description

### Background

### [Technical Field]

The present invention relates to a card insertion system and a card removal system that insert and remove a card into and from a card holder arranged on a returnable box.

### [Related Art]

In logistics processes at factories and other facilities, returnable boxes are often used to transport goods. In these returnable boxes, cards with information on the goods and their transportation are placed, and the distribution of the goods is sometimes managed using these cards. This may improve the efficiency of the distribution process. For example, Patent Document 1 shows an example of a beer case flowing on a conveyor belt. In this example, a technology is proposed to automatically insert an identification card through an opening in the beer case. The introduction of such a technology can contribute to manpower saving in the distribution process.

### [Prior Art Reference]

### [Patent Documents]

[Patent Reference 1] JP-A-H03-111234

### [Problems to be solved]

Some of the above-mentioned returnable boxes are equipped with a card holder to hold a card. This type of card holder is often installed on the outside of a returnable box to facilitate visual confirmation of information on the card. In recent years, a technology has also been proposed that makes it possible to easily obtain card information by mechanically reading a bar code or a QR code (registered trademark) attached to the card. In other words, the technical significance of placing the card outside the returnable box is becoming increasingly important. However, in distribution processes where returnable boxes with card holders are used, cards are still inserted into the card holder by hand. Thus, there is still room for improvement in the configuration related to card insertion in order to increase efficiency and reduce manpower in logistics processes where returnable boxes with card holders are used.

### Summary

The present invention was made in view of the above-mentioned problems and others. The main purpose is to automate the insertion of a card into a card holder provided on a returnable box, thereby contributing to the efficiency and manpower saving in the logistics process.

In order to realize the foregoing object, as one mode, the present disclosure provides a card insertion system provided with a storage box having a wall with an outer surface a part of which is provided as a side wall portion and a card holder installed on the side wall portion with an interspace formed therebetween, the card i) being allowed to be inserted into the interspace and ii) providing information thereon showing how to handle either the storage box or objects being stored in the storage box. The card insertion system is provided with a card supporting member provided with a plate insertable, the card supporting member supporting the card which is stacked on the plate; a moving mechanism moving the card supporting member; and a controller controlling motions of both the card supporting member and the moving mechanism.
wherein the controller is adapted to:
control the moving mechanism such that the card supporting member is moved to a specific part which is lead to an entrance space of the interspace on the side wall portion when a predetermined edge portion of the plate is directed toward the specific part;
control the moving mechanism such that a posture of the card supporting member is changed to direct the predetermined edge portion toward the entrance space and the predetermined edge portion directed toward the entrance space on the side wall portion when reaching the specific part; and
control both of the moving mechanism and the card supporting member such that the card is released from being held when the plate has been inserted from the entrance space to the interspace.

In the foregoing mode, the card supporting member is approached toward the specific part with the predetermined edge portion of the plate facing the specific part of the side wall portion (this approach is referred to as a first approach). This prevents inconveniences such as the first approach being obstructed by a convexity (e.g. opening flange 89) formed on the outer surface of the storage box, for example.

When reaching the specific part, the posture of the card supporting member is changed so that the predetermined edge portion faces the entrance space, and the predetermined edge portion approaches the entrance space along the side wall portion (this approach is referred to as a second approach). The specific part continues to the entrance space and displaces the predetermined edge portion along the side wall portion. This prevents the plate from deviating from the route toward the entrance. The orientation of the card supporting member (plate) is then changed so that the specific edge portion faces the entrance space. This prevents the card holder from interfering with the plate's movement.

This movement allows the plate to be inserted from the entrance space into the interspace. After the plate is inserted, the card can be passed to the card holder by releasing holding of the card. Such a configuration can realize automation of card insertion into the card holder and contribute to efficiency and manpower saving in logistics processes where returnable boxes with card holders are used.

In addition, as a system to be paired to the foregoing card insertion system, there can be provided a card removal system (10) provided with a storage box (80) having a wall with an outer surface a part of which is provided as a side wall portion (86)and a card holder (91) installed on the side wall portion with an interspace (95) formed therebetween, a card (CA) i) being allowed to be removed from the interspace and ii) providing information thereon showing how to handle either the storage box or objects being stored in the storage box,
wherein the card removal system comprises
a card supporting member (51) provided with a plate (52) inserted when the card is removed from the interspace, the card supporting member supporting the card which is stacked on the plate;
a moving mechanism (20) moving the card supporting member; and
a controller (70) controlling motions of both the card supporting member and the moving mechanism,
wherein the controller is adapted to
   control the moving mechanism such that i) the card supporting member is moved to a specific part (SP2) lead to an entrance space (91a) to the interspace on the side wall portion when a predetermined edge portion ( 52a) of the plate is directed toward the specific part and ii) the predetermined edge portion is directed toward the entrance space by changing a posture of the card supporting member so as to enable the predetermined edge portion to be directed toward the entrance space along the side wall portion, when the card supporting member is prevented from moving the side wall portion; and
   control both of the card supporting member and the moving mechanism such that the card placed in the interspace after being inserted in the interspace via the entrance space is supported and, with the card supported in the interspace, the plate is released from the interspace.

### Brief Description of the Drawings

In the accompanying drawings:
Fig. 1 is a perspective view showing a conveying system employed in the first embodiment;
Fig. 2A is a side view of a returnable box employed in the embodiment;
Fig. 2B is a sectional view of the returnable box;
Fig. 3 is a block diagram showing the electric configuration of the conveying system;
Fig. 4 is a flowchart exemplifying a flow of conveying the returnable box by the conveying system;
Fig. 5 is a plan view showing a hand of an industrial robot used with the conveying system;
Fig. 6 is a view outlining a chucking device for a returnable box (, which is a view along an arrow A shown in Fig. 5);
Fig. 7A to 7C are views each outlining a first chucking device for the returnable box (, which is a view along an arrow B shown in Fig. 5) and how to operate for chucking;
Figs. 8A to 8D are illustrations each showing how to insert the card into the card holder;
Figs. 9E to 9G are illustrations each showing how to remove the card from the card holder;
Fig. 10A to 10C are views each outlining a second chucking device for the returnable box (, which is a view along an arrow C shown in Fig. 5) and how to operate for chucking;
Figs. 11A to 11D are illustrations each showing how to insert the card into the card holder;
Figs. 12E to 12H are illustrations each showing how to remove the card from the card holder;
Figs. 13A to 13D are illustrations each showing how to insert the card into the card holder;
Figs. 14E to 14H are illustrations each showing how to remove the card from the card holder;
Fig. 15A to 15F are views each outlining a first chucking device for the returnable box and how to operate for chucking in the second embodiment; and
Fig. 16A to 16F are views each outlining a second chucking device for the returnable box and how to operate for chucking in the second embodiment.

### Descriptions of the Preferred Embodiments

### <First embodiment>

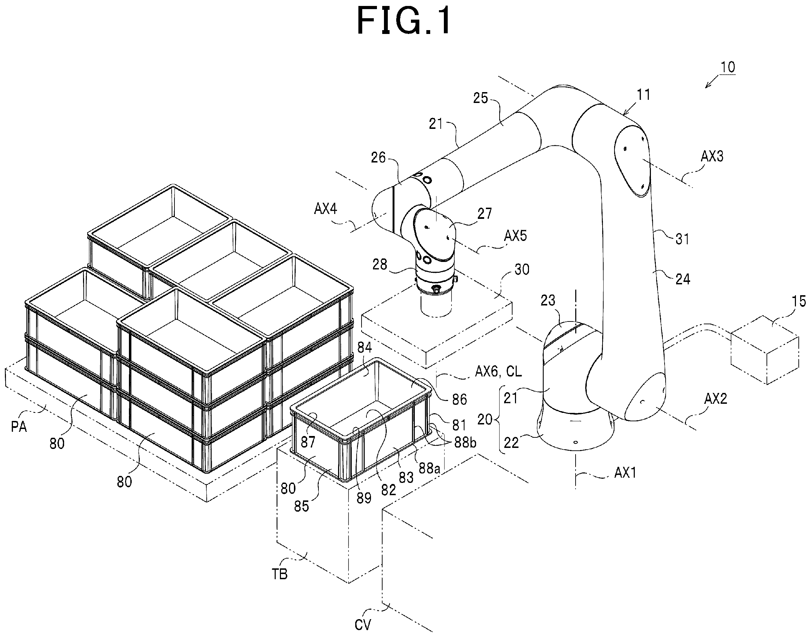

According to Figs. 1 to 14E - 14H, a first embodiment of a card insertion system will now be described. This card insertion system is embodied in a conveying system into which returnable boxes are conveyed by conveying processes in factories or other facilities.

As shown in Fig. 1, the conveying system 10 has a robot 11 which is a vertically articulated industrial robot. By this robot 11, returnable boxes 80 (corresponding to "storage boxes") stacked on a pallet PA are transferred to a conveyor CV. Those returnable boxes 80 are sequentially supplied to the manufacturing and assembly lines by the conveyor CV.

As shown in Fig. 1, the robot 11 has, as a main body thereof, a robot body 20. This robot body 20 has a base part 22 fixed to a pedestal or the like, a shoulder part 23 supported by the base part 22, a lower arm part 24 supported by the shoulder part 23, and a first upper arm part 25 supported by the lower arm part 24. In addition, the robot body 20 has a second upper arm portion 26 supported by the first upper arm portion 25, a wrist portion 27 supported by the second upper arm portion 26, and a flange portion 28 supported by the wrist portion 27.

The base 22 and shoulder 23 have a first joint formed therebetween, which rotatably connects the shoulder 23 to the base 22. Thus, the shoulder 23 can rotate horizontally on the connecting shaft (serving as a first axis AX1) of the first joint. The shoulder 23 and lower arm 24 have a second joint provided therebetween, which connects the shoulder 23 and lower arm 24 in a mutually rotatable manner. Thus, the lower arm 24 can rotate vertically on the connecting shaft (serving a second axis AX2) of the second joint.

The lower arm 24 and first upper arm 25 have a third joint provided therebetween, which connects the lower arm 24 and first upper arm 25 in a mutually rotatable manner. Thus, the first upper arm 25 can rotate in the vertical direction on the connecting shaft (serving as a third axis AX3) of the third joint. The first upper arm 25 and the second upper arm 26 have a fourth joint installed therebetween, which connects the first upper arm 25 and the second upper arm 26 in a mutually rotatable manner. Thus, the second upper arm 26 can rotate in a twisting direction on the connecting shaft (serving as a fourth axis AX4) of the fourth joint.

The second upper arm 26 and wrist portion 27 have a fifth joint provided therebetween, which connects the second upper arm 26 and the wrist portion 27 in a mutually rotatable manner. Thus, the wrist portion 27 can rotate in the vertical direction on the connecting shaft (serving as a fifth axis AX5) of the fifth joint. The wrist portion 27 and the flange 28 have a sixth joint provided therebetween, which connects the wrist portion 27 and the flange 28 in a mutually rotatable manner. Thus, the flange 28 can be rotated in a twisting direction on the connecting shaft (serving as s sixth axis AX6) of the sixth joint.

The shoulder 23, lower arm 24, first upper arm 25, second upper arm 26, wrist portion 27, and flange 28 are arranged in a row to form the arm 21 of robot body 20. In the arm 21, a servomotor serving as an electric actuator that rotates the joint is provided for each of the joints. A hand 30 capable of gripping the returnable box 80 is attached to the flip portion 28 of the arm 21.

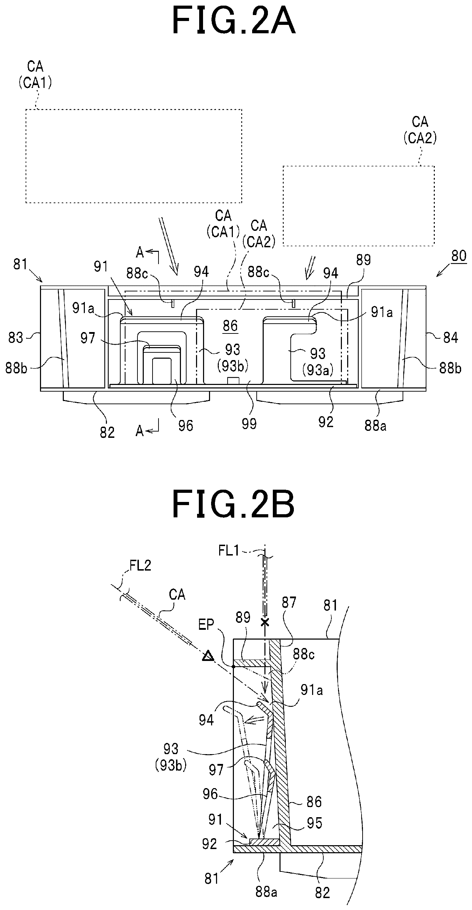

A supplementary explanation of the returnable box 80 will now be made with reference to Figs. 1, 2A and 2B. Fig. 2A is a side view of the returnable box 80, and Fig. 2B is an A-A line partial cross-sectional view in Fig. 2A.

As shown in Fig. 1, the returnable box 80 includes a box body 81 with an open opening 87 on the upper side and a lid (not shown) covering the opening 87 of the box body 81. The box body 81 has a rectangular (or square) bottom plate 82, a set of side plates 83, 84 rising from the long sides of the bottom plate 82, and a set of side plates 85, 86 rising from the short sides of the bottom plate 82. Protruding portions extending lengthwise and widthwise are formed on the outer surfaces of the side plates 83 to 86. Specifically, these protruding portions include an opening flange 89 formed along the upper end portion of the side plates 83 - 86, horizontal lips 88a formed along the lower end portion of the side plates 83 - 86, and vertical libs 88b which extend vertically up and down to connect the opening flange 89 and the horizontal libs 88a. The box body 81 is reinforced by the opening flange 89, horizontal libs 88a, and vertical libs 88b.

As shown in Fig. 2A, a card holder 91 made of synthetic resin that can hold (attach) a card CA is located on the outer surface (corresponding to the "side wall portion") of the side plate 86 of the returnable box 80. The card CA is an identification component for identifying information related to manufacturing or transportation of various goods (objects), and by using such information to manage the distribution of goods. Hende, on the card CA, by printing or other means, there is provided identifying information showing how to handle either the storage box or objects being stored in returnable box 80 for various types of work such as manufacturing or transportation. The card CA itself is made of a sheet of paper, plastic, or other materials and, preferably, formed to have a certain degree of hardness.

The card holder 91 is transparent, thus making it difficult to visually check the card CA.

The card holder 91 has a long base 92 extending along the horizontal libs 88a and a rising portion 93 rising upward from the base 92. By fixing the base 92 to the horizontal libs 88a, the card holder 91 is integrated with the box body 81. The rising portion 93 is formed as a plate opposite the outer surface of the side plate 86. The base portions (lower end portions) of rising portions 93 are formed as fixed ends, while tip portions (upper end portions) 94 are formed as free ends. An interspace 95 is formed between the rising portion 93 and the side plate 86, and a card CA can be inserted into this interspace 95.

The tip portions 94 are located lower than the opening flange 89 in the vertical direction, and the tip portions 94 are separated from the opening flange 89. In other words, an overlap with the rising portion 93 is avoided for a portion of the side plate 86 that is closer to the opening flange 89.

As shown in Fig. 2B, the tip portions 94 are bent obliquely so that the tip portions 94 provide convex shapes toward the side plate 86. Further, the tip portions 94 have portions extending upward from the bent portion to the opening flange 89, in which such oblique extending portions gradually depart farther from the side plate 86 as approaching the opening flange 89. As a result, there is formed a space sandwiched between the tip portion 94 and the side plate 86 and this space is provided as an entrance to the interspace 95, or entrance space 91a of the card holder 91.

In addition, since the tip portion 94 is bent as described above, it is easier for the operator to put his/her fingers on the tip portion 94. When manually inserting/removing the card CA, the operator can hang his/her fingers on the tip portion 94 and pull it toward the front, thus causing the rising portion 93 to bend (elastic deformation) with the base 92 functioning as a base for deformation. This facilitates insertion and removal of the card CA into the card holder 91. After insertion of the card CA, the card CA is pressed against the side plate 86 by the elastic force of the rising portion 93 when the fingers are released from the rising portion 93, and the card CA is held (cramped) between the rising portion 93 and the side plate 86. This prevents the card CA from falling out. In the following description, the rising portion 93 is referred to as "holding portion 93.

The card holder 91 shown in the present embodiment has two holding portions 93, one on the left and one on the right (right holding portion 93a and left holding portion 93b) when being viewed in Fig. 2A. The card CA is inserted over the left and right holding portions 93a and 93b (see Fig. 2A). Incidentally, the left holding portion 93b is larger in width than the right holding portion 93a, and there is a gantry-shaped opening in the center of the holding portion 93 in the lateral direction in Fig. 2A. In this opening portion, a smaller holding portion 96 is placed and also rises upward from the base 92 like the holding portion 93, and its tip portion 97 is bent. The inserted card CA can be clamped at two positions by the holding portions 93b and 96, thereby strengthening the holding function. When the card CA is inserted into the card holder 91 by the conveying system 10, the plate of the card chucking device described below is inserted deeper than the tip portion 97 of the holding portion 96.

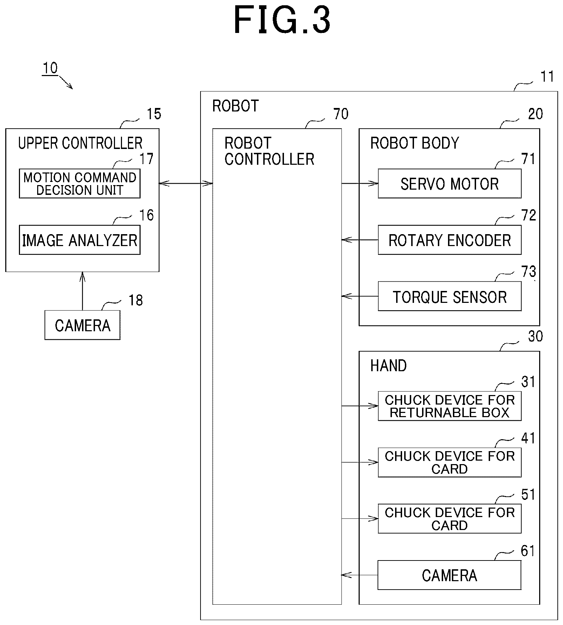

Next, with reference to Fig. 3, a supplementary description of the electrical configuration of the conveying system 10 is given. The conveying system 10 includes a higher-level controller 15, which together with the robot controller 70 constitutes a "controller," and a camera 18 that can photograph from above a pallet area where the pallet PA (see Fig. 1) is located. The camera 18 is communicably connected to the higher-level controller 15, and the images taken by the camera 18 are transmitted to the higher-level controller 15.

The higher-level controller 15 is equipped with an image analyzer 16 that analyzes images taken by the camera 18 to identify the position and orientation of the returnable box 80, and a motion command determining unit 19. The motion command determining unit 19 is adapted to determine the returnable box 80 to be transported based on the analysis results of the image analyzer 16, and also determine a motion command indicating the motion mode of the robot 11 under which the returnable box 80 is transported. The motion command determined by the motion command determining unit 19 is transmitted to the robot controller 70. This motion command includes information indicating a motion target position necessary for the robot 11.

The robot controller 70 receives a motion command from the higher-level controller 15. In response, the robot controller 70 reads a motion program corresponding to the motion command from program storage, and identifies a motion target position by executing the read motion program. The robot controller 70 then generates a target trajectory that smoothly connects the motion target position identified with the current positions of the arm 21 (i.e., each of the positions of the movable joints). Furthermore, the robot controller 70 identifies interpolated positions, which are positions that subdivide the target trajectory. Connected to robot controller 70 are servomotors 71 located at the resolving joints and rotary encoders 72 corresponding to each of those servomotors 71. Based on the identified interpolated positions and the current position data obtained from the rotary encoder 72, i.e., the encoder values indicating the rotational angles (rotational positions) of the servomotors 71, the robot controller 70 drives control of the servomotors 71.

The robot 11 is also equipped with torque sensors 73 that detect the torque (force) generated by each of the joints. The torque sensors 73 are connected to the robot controller 70, and the robot controller 70 obtains the magnitude and direction of the force based on signals detected by the torque sensors 73. Thus the robot controller 70 is able to decelerate or stop (including protective stop) the arm 21 of the robot 11 accordingly. The robot 11 shown in the present embodiment is provided as a cooperative robot designed to cooperate with humans, and safety is considered by configuring the robot to decelerate/stop the hand 30 in the event of a collision between the arm 21 or hand 30 and a human or other equipment. Though details will be described later, but when the hand 30 touches the returnable box 80 in inserting and removing the card CA, it is judged whether or not the hand 30 has come in contact with the returnable box 80, based on the signals from the torque sensor 73.

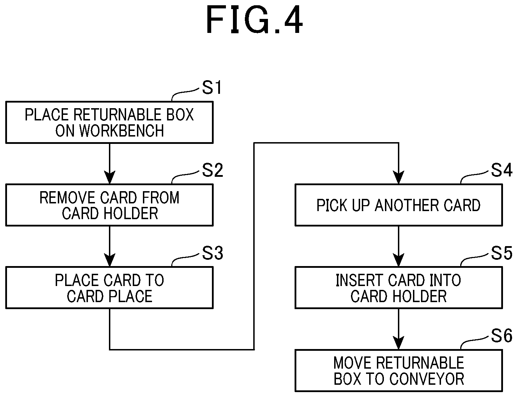

The hand 30 has a returnable-box chucking device 31 that can grip the returnable box 80 and card chucking devices 41 and 51 that can hold a card CA. The returnable-box chucking device 31 and card chucking devices 41 and 51 are all communicably connected to robot controller 70. Referring now to Fig. 4, the work flow performed by the conveying system 10 is exemplified.

The pallet PA on which the returnable box 80 is loaded is placed in the pallet area. In response to this placement, the returnable box 80 on the pallet PA is grasped by the returnable-box chucking device 31 and transferred to the worktable TB in front of the robot 11 (step S1 in Fig. 4). Specifically, the returnable box 80 is placed such that the card holder 91 faces the robot 11. The worktable TB has positioning members that defines the left/right and front/back positions of the returnable box 80. The positioning members prevent positional variation of the returnable box 80. After the returnable box 80 is placed in the worktable TB, the presence or absence of the card CA is checked based on images taken by the camera 61 (see Fig. 3) mounted on the hand 30.

If a card CA (card CA2, described in detail below) remains in the card holder 91, the card CA is removed using the card chucking device 51 (step S2). The card CA removed from the card holder 91 is transferred to the card storage area (step S3). A new card CA is picked up from the card storage area using the card chucking devices 41 and 51 (step S4).

Thereafter, the picked-up card CA is inserted into the card holder 91 of the returnable box 80 located in the worktable TB, by using the card chucking devices 41 and 51 (step S5). This completes the replacement of the card CA.

After the card CA replacement is completed, the returnable box 80 on the worktable TB is gripped by the returnable-box chucking device 31 and transferred to the conveyor CV (step S6).

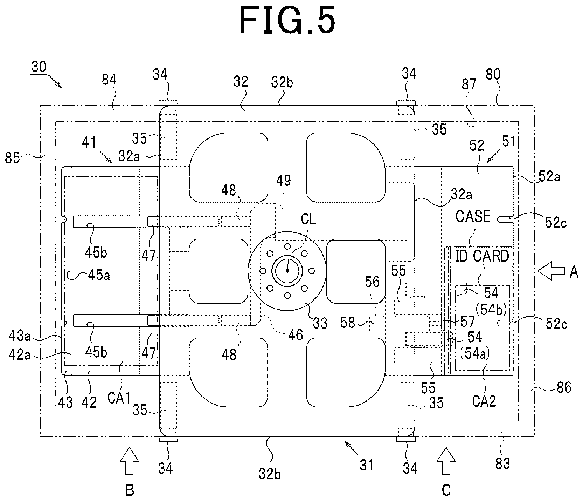

With reference to Fig. 5, the configuration of the hand 30 will now be explained supplementarily.

As already described, the hand 30 is mainly composed of the returnable-box chucking device 31 and the card chucking devices 41 and 51. The returnable-box chucking device 31 has a rectangular base plate 32. In the center of the base plate 32, a shaft portion 33 is formed orthogonally to the base plate 32.
The shaft portion 33 is fixed to the flange 28 of the arm 21 such that the central axis CL of the shaft portion 33 is coaxial with the sixth axis AX6 of the arm 21.

The lengths of the long sides 32a of the base plate 32 are the same as the interval between the side plates 83 and 84, and the lengths of the short sides 32b are shorter than the interval. In the following description, the side surface of the base plate 32 on which the shaft portion 33 is erected is distinguished as the "upper surface" and the opposite side surface as the "lower surface."

The movable jaws 34 and the drive mechanism 35 are provided at the four corners on the lower surface of the base plate 32. The movable jaws 34 support the returnable box 80 by contacting the opening flange 89 of the returnable box 80 from below. The drive mechanism 35 moves the jaws 34 to supported and non-supported positions selectively in response to a drive signal.

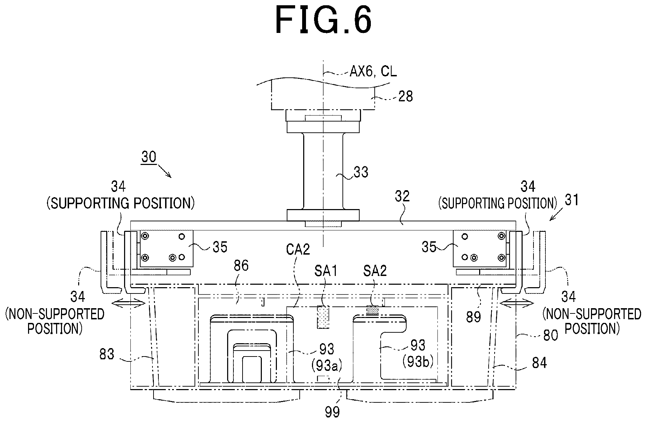

The hand 30 is positioned so that the bottom surface of the base plate 32 faces the opening 87 of the returnable box 80 and the short sides 32b of the base plate 32 are positioned above the side plates 83 and 84 that constitute the long sides of the returnable box 80 (opening 87). In this arrangement, the respective jaws 34 is moved from their non-supported positions to their supported positions. This causes the returnable box 80 to be gripped (see Fig. 6). After the returnable box 80 is transported, the jaws 34 are moved from their supported positions to their non-supported positions. This releases the grasp of the returnable box 80. As a result, the returnable box 80 is gripped (see Fig. 6). After the returnable box 80 has been transported, the jaws 34 are moved from the supported position to the non-supported position. This releases the grasp of the returnable box 80.

The base plate 32 has the foregoing card chucking devices 41, 51 protruding from the long sides 32a of the base plate 32 in the horizontal direction. Practically, as shown in Fig. 5, the card chucking device 41 protrudes from one of the long side 32a and the card chucking device 51 protrudes from the other of the long sides 32a in the plan view of the hand 30. The card CA shown in the present embodiment can be classified into a paper card CA1 (so-called "Kanban") and a plastic ID card CA2 which is smaller and thicker than the card CA1. The one card chucking device 41 is responsible for chucking the card CA1, and the other card chucking device 51 is responsible for chucking the card CA2.

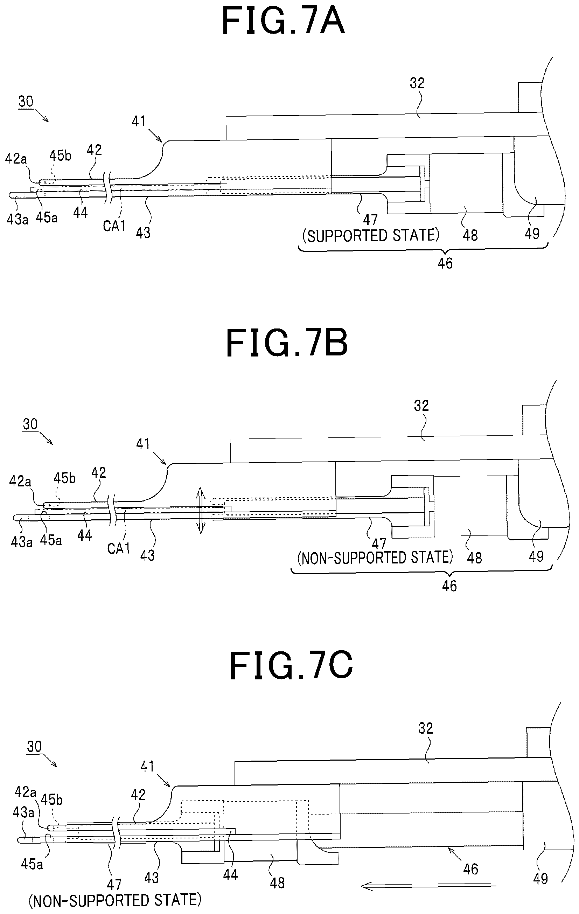

First, the card chucking device 41 (hereinafter also referred to as a first chucking device 41) will now be explained with reference to Figs. 5 and 7.

As shown in Fig. 7, the first chucking device 41 has a housing member 45 (see Fig. 7) that contains a structure in which a pair of upper and lower plates 42 and 43 are combined to face each other with the interspace 44 formed therebetween. In the housing member 45, the upper plate 42 (upper plate 42) overlaps the lower surface of the base plate 32. The upper plate 42 is integrated with the base plate 32 by being fixed to the base plate 32.

The spacing between the plates 42 and 43 is larger than the thickness of the card CA1, thus allowing the interspace 44 to accommodate the card CA1 in its unfolded state. The housing member 45 is rectangular in the plan view of the hand 30, and its one end of extends from the long side 32a of the base plate 32. At this one end, there is formed an outlet 45a through which the card CA1 is discharged.

The first chucking device 41 has a chuck member 47 and a switching mechanism 48. The chuck member 47 is configured to be switchable between a supported state in which the card CA being housed is retained and a non-supported state. The switching mechanism 48 is configured to switch the chuck member 47 between a supported state and a non-supported state. By holding the card CA by the chuck member 47, the card CA is avoided from falling out.

The housing member 45 has a slit 45b that extends in the short side direction of the base plate 32, i.e., in the direction of extension of the housing member 45. A chuck member 47 is placed in this slit 45b, and the chuck member 47 can slide along the slit 45b (in the lateral direction in Fig. 5). The first chucking device 41 has a slide mechanism 49 for sliding the chuck member 47. The chuck member 47 and the slide mechanism 49 realize an ejector 46 that ejects the card CA from the outlet 45a.

Specifically, the chuck member 47 is configured to contact the edge of the card CA1 housed in the interspace 44, in detail, as being contacted to the edge which is opposite to the outlet 45a. The chuck member 47 is slidable toward the outlet 45a. As a result, the card CA pushed by the chuck member 47 is ejected from the housing member 45 through the outlet 45a (see Fig. 7C).

The first chucking device 41 in the present embodiment discharges the card CA1 in a state where the housing member 45 is inserted into the interspace 95 between the card holder 91 and the side plate 86. This passes the card CA1 to the card holder 91. One of the features is that the tip portion 42a of the upper plate 42 and the tip portion 43a of the lower plate 43 are shifted in order to facilitate such a movement.

Specifically, the protrusion amount of the lower plate 43 from the base plate 32 is larger than that of the upper plate 42 from the base plate 32, whereby the lower plate 43 has a portion which extends from the upper plate 42. In other words, the lower plate 43 has the portion which extends from the portion opposite to the upper plate 42, and the tip of the extended portion (tip portion 43a) constitutes the "predetermined edge portion". The specific configuration for shifting the position of the tip portion 42a and the tip portion 43a is arbitrarily made. For example, the length (width) of the first plate and the second plate may be different, or the first plate and the second plate may be arranged by shifting the lengths in the length direction (width direction).

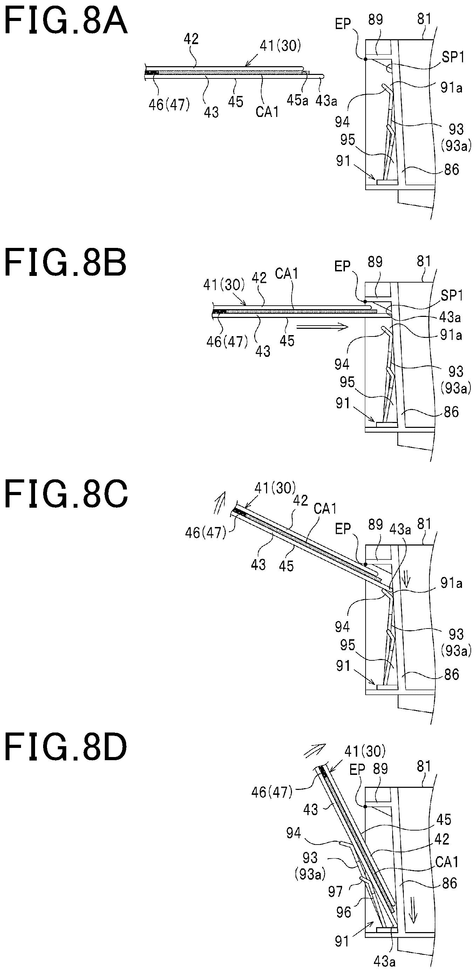

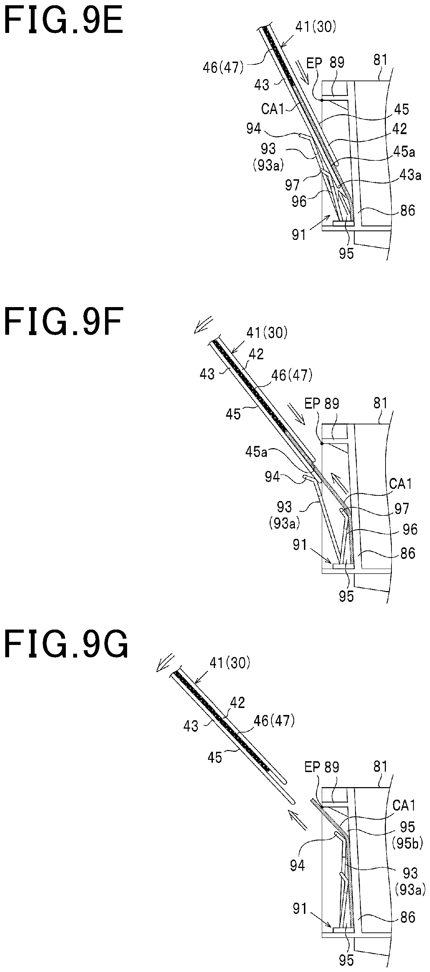

The flow of insertion of the card CA1 is explained below with reference to Figs. 8 and 9, based on the relationship between the two plates 42 and 43.

When inserting the card CA1 into the card holder 91 of the returnable box 80, the first chucking device 41 (i.e., hand 30) is placed in a horizontal position in front of the side plate 86 in order to wait for insertion (See Fig. 8A). In detail, the tip portion 43a of the lower plate 43 is placed on the side plate 86 so that the tip portion 43a of the lower plate 43 faces a part (specific part SP1) that is lower than the opening flange 89 and higher than the card holder 91 (entrance space 91a).

After the placement to the insertion waiting position is completed, the posture of the arm 21 is changed so that the first chucking device 41 (i.e., hand 30) moves horizontally toward the specific location SP1. This avoids the movement of the hand 30 being obstructed by the opening flange 89. The horizontal movement of the hand 30 continues until the lower plate 43 of the first chucking device 41 contacts the side plate 86 (see Fig. 8B). Hereafter, the approach from the insertion waiting position to contacting the side plate 86 is also referred to as the first approach.

In the first chucking device 41, the card CA1 can be accommodated in such a way that the card CA1 does not protrude beyond the tip portion 43a of the lower plate 43. Therefore, when the first chucking device 41 is moved toward the side plate 86 in the first approach, the card CA1 does not hit the side plate 86 before the lower plate 43.

After the first approach is completed, the second approach is executed to move the first chucking device 41 to the insertion target position. In the second approach, the first chucking device 41 (i.e., hand 30) is tilted so that the tip portion 43a of the lower plate 43 faces toward the entrance space 91a (toward the lower side). Along with this, in the second approach, tip portion 43a is displaced along the side plate 86 to the entrance space 91a side (toward the lower side) (see Fig. 8C). In this case, the posture of the arm 21 is changed so that the first chucking device 41 (hand 30) is rotated around the tip portion 43a. This rotation prevents the tip portion 43a from moving away from the side plate 86.

As mentioned above, the tip portion 43a of the lower plate 43 extends beyond the tip portion 42a of the upper plate 42. This reduces the inconvenience in which the tip portion 42a of the upper plate 42 hits the side plate 86, thereby limiting the posture changes, when changing the posture of the first chucking device 41.

In the present embodiment, the opening flange 89 is located on the upper side of first chucking device 41. Thus, when the first chucking device 41 is tilted significantly, there is a possibility that the first chucking device 41 may hit the opening flange 89. Hence, when changing the tilt, the posture of arm 21 is changed so that the distance between the first chucking device 41 and the tip EP of the opening flange 89 is constant. This allows the inclination of the first chucking device 41 to the side plate 86 to be minimized while avoiding collision with the opening flange 89.

While changing the inclination of the first chucking device 41, the tip portion 43a of the lower plate 43 is displaced toward the entrance space 91a. As a result, the lower plate 43 comes in contact with the card holder 91, in detail, the tip portion 94 of the holding portion 93. In this operation, since the lower plate 43 is inclined at an angle, the holding portion 93 is formed to be pushed away from the side plate 86 by the lower plate 43. This causes elastic deformation of the holding portion 93, which expands the interspace 95 (i.e., entrance space 91a).

After this, the posture of the arm 21 is changed so that the inclination of lower plate 43 with respect to the side plate 86 becomes smaller and the tip portion 43a of the lower plate 43 is displaced downward along the side plate 86. When the lower plate 43 reaches the bottom (back part) of the card holder 91, the second approach is completed so that the arm 21 stops temporarily (see Fig. 8D). In other words, the first chucking device 41 (hand 30) is placed at the insertion target position. Thereafter, the switching mechanism 48 is activated and the chuck member 47 is switched from the supported state to the non-supported state. This activates the sliding mechanism 49 and causes the chuck member 47 to slide toward the outlet 45a. As a result, the card CA1 is pushed out of outlet 45a (see Fig. 9E).

When ejecting the card CA1, the first chucking device 41 starts a release operation from the interspace 95 in conjunction with (e.g., synchronized with) the movement of the chuck member 47. In this release operation, the posture of the arm 21 is changed so that the housing member 45 is displaced towards the opposite side of the chuck member 47 (see Fig. 9F). This prevents the ejected card CA1 from being bent or crushed between the bottom of the card holder 91 and the chuck member 47. This is desirable in reducing the visibility of information which is provided on the card CA1.

Thereafter, the lower plate 43 and the holding portion 93 of the card holder 91 are separated in the process of the release operation of the first chucking device 41. Thus, the holding portion 93 returns towards the side plate 86 by elastic force. The card CA1 is sandwiched between the holding portion 93 and the side plate 86 (see Fig. 9G).

It is assumed such that, in inserting the card CA into the entrance space 91a of the card holder 91, it is ideal to place the card CA on the extension of the entrance space 91a and move it straight to the entrance space 91a. However, as illustrated in Fig. 2B, the opening flange 89 is located on the extension of the entrance space 91a. This makes such a movement impractical (see a virtual line FL1 in Fig. 2B).

On the other hand, if a straight route to the entrance space 91a (see a virtual line FL2 in Fig. 2B) is secured by avoiding the tip EP of the opening flange 89, high accuracy is required to set a operating trajectory. Thus, the possibility of the card insertion failure increases. In this regard, in the insertion of the card CA1 by using the first chucking device 41, the card CA1 is advanced to the entrance space 91a via the two-stage approach consisting of the first approach described and a second approach which will be below. This two-stage approach makes it possible to reduce the possibility of the card insertion failure.

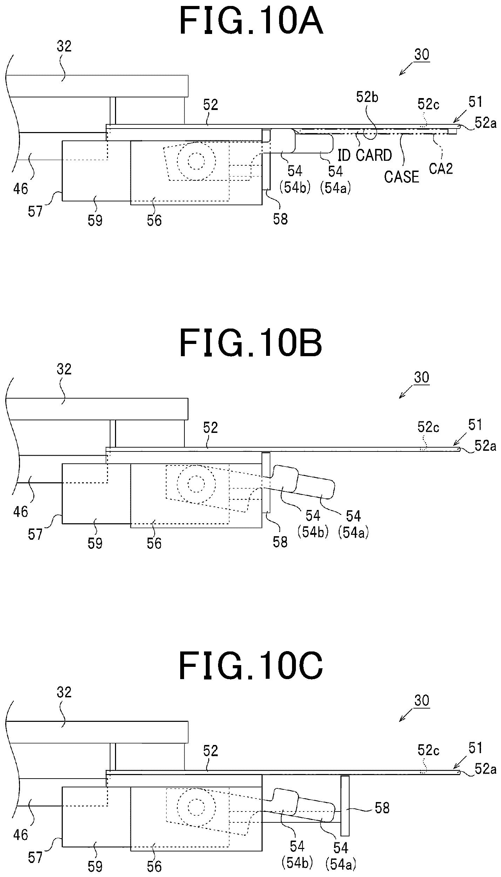

With reference to Figs. 5 and 10, the card chucking device 51 (hereinafter also referred to as a second chucking device 51) will now be explained.

As shown in Fig. 10, the second chucking device 51 has a rectangular plate 52 fixed to the base plate 32 via a spacer. The plate 52 is parallel to the lower surface of the base plate 32, and one end thereof (hereinafter referred to as "tip portion 52a") extends from the base plate 32 in the lateral direction in Fig. 10. In the following description, the plate 52 has a surface facing the base plate 32 is referred to as the "upper surface" and a surface which is opposite to the supper surface which is referred to as a "lower surface 52b".

On the side of the lower surface 52b of the plate 52, a chuck member 54 and a switching mechanism 56 are provided, as shown in Figs. 10A to 10C. The chuck member 54 is configured to hold a card CA2 between the chuck member 54 and the plate 52. The switching mechanism 56 is configured to switch the chuck member 54 between a supported state (see Fig. 10A) in which the chuck member 54 holds the card CA2 and a non-supported state (see Fig. 10B) in which the chuck member 54 does not hold the card CA2. As a supplementary explanation of the card CA2, the card CA2 is operated in a transparent case for convenience because it is smaller than the card holder 91. The second chucking device 51 is configured to insert the case with the card CA2, into the card holder 91.

In the present embodiment, the chuck member 54 has a first chuck member 54a that holds the mouth or thereabouts of the case and a second chuck member 54b that holds the case and card CA2 together. The first chuck member 54a holds the case near the mouth thereof to prevent the card CA2 from falling out of the case. The card CA2 and the case have some strength. By sandwiching the case with the card CA2 therein by the second chuck member 54b, drooping of the case during holding can also be prevented reliably. Thus, the configuration corresponding to the lower plate 43 of the first chucking device 41 can be omitted in the present embodiment.

When inserting the card CA2 into the card holder 91 using the second chucking device 51, the second chuck member 54b passes through an open space 99 formed between the left and right holding portions 96 (see Fig. 2A). Therefore, interference with the card holder 91 is avoided. The movement path of the first chuck member 54a is kept in front of the card holder 91 (i.e., the entrance space 91a) in the case. Therefore, interference between the first chuck member 54a and the card holder 91 is avoided.

On the side of the lower surface side of the plate 52, there is provided an extrusion member 58 that can slide toward and away from the tip portion 52a of the plate 52, and a slide mechanism 59 for sliding the extrusion member 58. The extrusion member 58 is positioned to contact the card CA2 held by the chuck member 54, from the opposite side to the tip portion 52a. The slide mechanism 59 is actuated to slide the extrusion member 58 toward the tip portion 52a. The card CA2 pushed by the extrusion member 58 is thus forcibly ejected from the second chucking device 51 (see Fig. 10C).

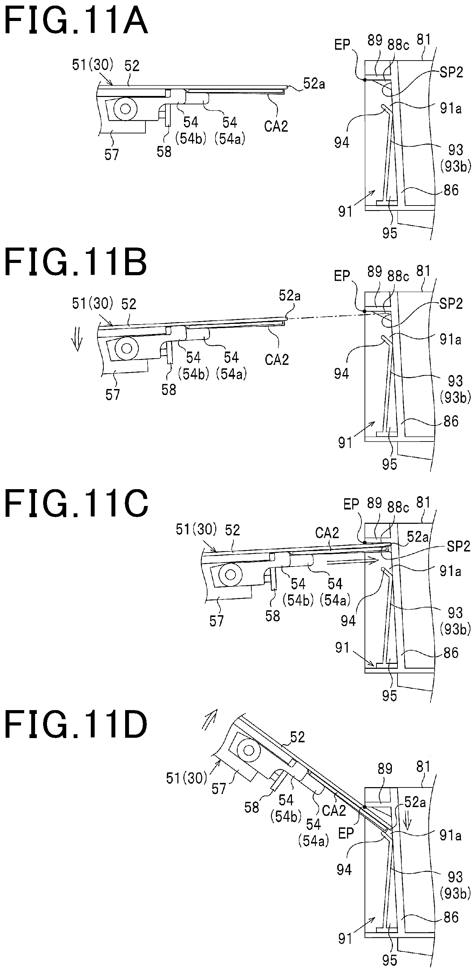

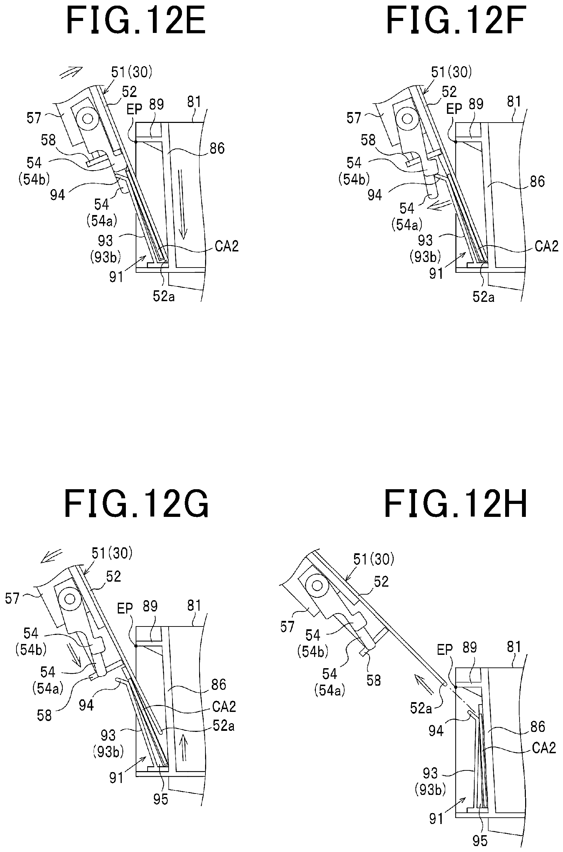

With reference to Figs. 11 and 12, a flow of insertion of the card CA2, which is performed by the second chucking device 51, will now be described.

To insert the card CA2 into the card holder 91 of the returnable box 80, the hand 30 is placed at the waiting position for insertion in front of the side plate 86 in a horizontal position (see Fig. 11A). In detail, the tip portion 52a of the plate 52 in the second chucking device 51 is positioned to face a location on the side plate 86. The location is below the opening flange 89 and above the card holder 91 (entrance space 91a) on the side plate 86.

Once placement to the insertion waiting position is completed, the tip portion 52a of the plate 52 is directed to the specific part SP2 near the root of the opening flange 89. Furthermore, the posture of the arm 21 is changed while tilting the second chucking device 51 (hand 30) (see Fig. 11B). In this case, the second chucking device 51 is rotated on the tip portion 52a, and the position of the tip portion 52a remains the same.

After tilting the second chucking device 51, the hand 30 is made to slide toward the specific part SP2. Specifically, the posture of the arm 21 is changed so that the hand 30 slides parallel to the plate surface of the plate 52. The sliding movement of the hand 30 ends when the plate 52 of the second chucking device 51 touches the side plate 86, and stops with the tip portion 52A of the plate 52 touching the side plate 86 (see Fig. 11C). If the plate 52 is moved horizontally aiming at the specific part SP2, there is a high possibility that the plate 52 will collide with the tip of the opening flange 89 before reaching the specific part SP2. In this respect, as described above, approaching the specific part SP2 from the diagonally lower side can prevent such an inconvenience from occurring.

A triangular rib 88c is formed near the root of the opening flange 89 to connect the opening flange 89 and the side plate 86 (see Fig. 5). In contrast, a notch 52c is formed in the tip portion 52a of the plate 52 to avoid contact with the triangular rib 88c. When moving the plate 52 to the specific part SP2, the triangular rib 88c is placed in the notch 52c, whereby the movement to the specific part SP2 is not disturbed.

After the first approach is completed, the second approach is performed to move the second chucking device 51 to the insertion target position. In the second approach, the second chucking device 51 (i.e., the hand 30) is tilted such that the tip portion 52a of the plate 52 faces towards the entrance space 91a (i.e., to the lower side). Along with this tilting, the tip portion 52a is displaced along the side plate 86 towards the entrance space 91a (i.e., to the lower side) (see Fig. 11D). At this time, the posture of the arm 21 is changed such that the second chucking device 51 (hand 30) is rotated on the tip portion 52a. This rotation avoids the tip portion 52a from leaving the side plate 86. The same is true of the second approach with use of the first chucking device 41 in that the posture of arm 21 is changed such that the distance between the second chucking device 51 and the tip EP of opening flange 89 remains constant.

While changing the inclination of the second chucking device 51, the tip portion 52a of the plate 52 is brought closer to the entrance space 91a. As a result, the card CA2 (or the case in detail) overlapping the plate 52 hits the holding portion 93 (or the tip portion 94 in detail) of the card holder 91. In this situation, the plate 52 is tilted at an angle. Thus, the holding portion 93 is pushed away from the side plate 86 by the plate 52. The interspace 95 (i.e., the entrance space 91a) is thus expanded because the holding portion 93 elastically deforms. Thereafter, the posture of the arm 21 is also changed in such a manner that the inclination of the plate 52 with respect to the side plate 86 is reduced and the tip portion 52a of the plate 52 is displaced downward along the side plate 86. By changing the inclination in this manner, snagging between the card CA2 or the case and the tip portion 94 of the holding portion 93 is avoided.

The second approach is completed when the plate 52 reaches the bottom (serving as a back part) of the card holder 91, and the arm 21 stops (see Fig. 12E). In other words, by this stop, the hand 30 is placed in the insertion target position. After that, the switching mechanism 56 is activated to switch the chuck member 54 from its supported state to its non-supported state (see Fig. 12F). At this point, the card CA2 is sandwiched between the holding portion 93 and the plate 52. Hence, even if the chuck member 54 is switched to the non-supported state, the card CA2 does not necessarily fall under its own weight.

With consideration of such a situation, after switching the chuck member 54 to its non-supported state, the slide mechanism 59 is activated to slide the extrusion member 58 toward the tip portion 52a of the plate 52 (see Fig. 12G). In conjunction with such movement of extrusion member 58, a release operation is initiated to release the second chucking device 51 from the interspace 95. Specifically, the posture of the arm 21 is changed in such a manner that the tip portion 52a of the plate 52 is displaced towards the upper side while increasing the inclination of the second chucking device 51 to the side plate 86. This prevents the card CA2 from moving following the plate 52.

Thereafter, in the process of release operation of the second chucking device 51, the plate 52 and the holding portion 93 of the card holder 91 are separated from each other. As a result, the holding portion 93 returns to the side plate 86 by elastic force. The card CA2 is thus sandwiched between the holding portion 93 and the side plate 86 (see Fig. 12H).

As described, the first chucking device 41 had the function of inserting the card CA1 into the card holder 91. In contrast, the second chucking device 51 has the function of inserting the card CA2 into the card holder 91 and also has the function of removing the card CA2 from the card holder 91. The reason why the second chucking device 51 consists of only one plate is to enable the second chucking device 51 to perform both insertion and ejection functions for the card CA2.

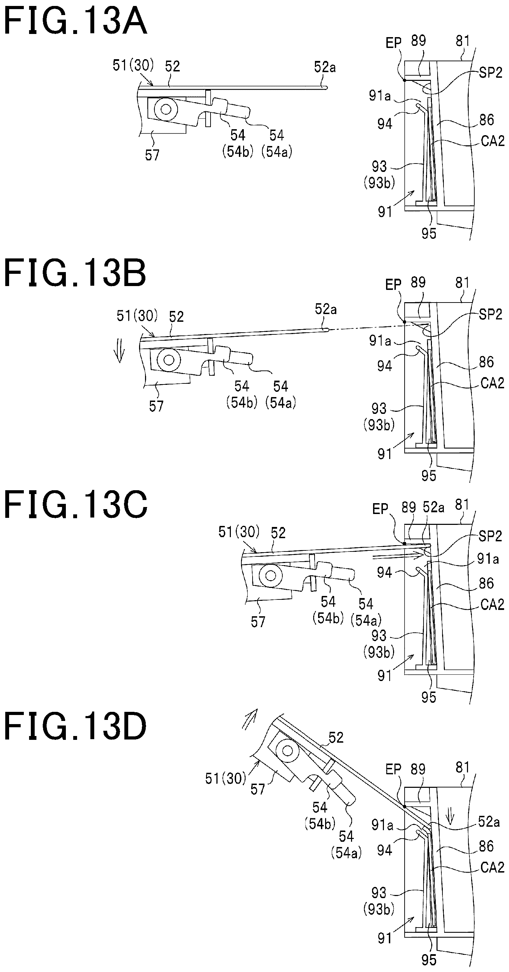

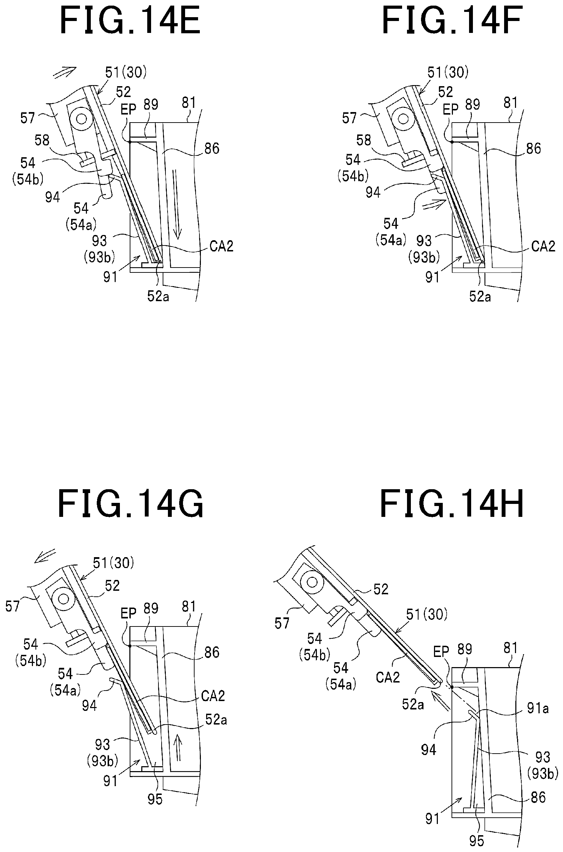

The flow of ejection of the card CA2, which uses the second chucking device 51, will now be described below, with reference to Figs. 13 and 14.

In the present embodiment, the movement of arm 21 when removing the card CA2 is basically the same as the movement of the arm 21 when inserting the card CA2, thus simplifying the control programs. For convenience of explanation, the case and ID card are collectively referred to as "card CA2" in Figs. 13 and 14.

To remove the card CA2 from the card holder 91 of the returnable box 80, the hand 30 is positioned in the horizontal state at the removal preparation position which is in front of the side plate 86 (see Fig. 13A). In detail, the tip portion 52a of the plate 52 of the second chucking device 51 is positioned to face a specific part SP1 on the side plate 86. This specific part is positioned below the opening flange 89 and above the card holder 91 (i.e., the entrance space 91a). The removal preparation position and the insertion waiting position are set to be the same position in the present embodiment.

Once the placement in the removal preparation position is completed, the posture of the arm 21 is changed to tilt the second chucking device 51 (i.e., the hand 30) (see Fig. 13B). Specifically, this posture change is made such that the tip portion 52a of the plate 52 faces the specific part SP2 (specifically, the specific part SP2 that is the root of the opening flange 89), which is closer to the opening flange 89 than the specific part SP1 is. In this operation, the second chucking device 51 is rotated on the tip portion 52a, and the position of the tip portion 52a remains the same.

When the second chucking device 51 has been tilted, the hand 30 is then moved to slide toward the specific part SP2. Specifically, the posture of arm 21 is changed to be slid parallel to the plate surface of the plate 52. This avoids that the movement of the hand 30 is obstructed by the opening flange 89. The sliding movement of the hand 30 ends when the plate 52 of the second chucking device 51 touches the side plate 86, and stops with the tip portion 52a of the plate 52 touching the side plate 86 (see Fig. 13C). In other words, the first approach from the removal preparation position to contacting the side plate 86 is the same as the first approach performed during the insertion of card CA2.

The case of the card CA2, which is inserted into card holder 91 protrudes to a position midway between the opening flange 89 and the card holder 91. If the position of the card CA2 varies vertically, the distance between the case and the opening flange 89 could be even smaller. Therefore, in the first approach, the tip portion 52a of the plate 52 is brought into contact with the root of the opening flange 89, thereby preventing the tip portion 52a from being brought into contact with the case.

Upon completion of the first approach, the second approach is then performed to move the second chucking device 51 to the removal target position. In the second approach, the second chucking device 51 (hand 30) is tilted so as to make the tip portion 52a of the plate 52 face towards the entrance space 91a (to the lower side), and the tip portion 52a is displaced downward along the side plate 86. In this case, the posture of the arm 21 is changed so that second chucking device 51 (i.e., the hand 30) is rotated on the tip portion 52a. This rotation avoids the tip portion 52a from leaving the side plate 86.

While changing the inclination of the second chucking device 51, the tip portion 52a of the plate 52 is brought closer to the entrance space 91a. As a result, the tip portion 52a of the plate 52 is inserted between the case (i.e., the card CA2) and the side plate 86 (see Fig. 13D). Thereafter, the posture of the arm 21 is continuously changed so that the inclination of the plate 52 with respect to the side plate 86 is reduced and the tip portion 52a of the plate 52 is displaced downward along the side plate 86.

The second approach is completed when the plate 52 reaches the bottom (i.e., a back part) of the card holder 91, resulting in a stop of the arm 21 (see Fig. 14E). In other words, the hand 30 is placed at the removal target position. In this state, the card CA and the case are pressed against the plate 52 by the holding portion 93 of the card holder 91. After that, the switching mechanism 56 is activated to switch the chuck member 54 from its open state to its closed state (see Fig. 14F).

Thereafter, the posture of the arm 21 is changed in a manner that the tip portion 52a of the plate 52 is displaced toward the upper side while increasing the inclination of the second chucking device 51 to the side plate 86 (see Fig. 14G). The card CA2 and the case held in the second chucking device 51 are then released from the card holder 91 together with the second chucking device 51. This completes the removal of the card CA2 (see Fig. 14H).

According to the first embodiment detailed above, the following excellent effects can be expected.

As described, in the present embodiment, a state is created in which the tip portions 43a and 52a of the plates 43, 52 are directed toward the specific parts SP1 and SP2 of the side plate 86. In this state, the card chucking devices 41, 51 are made to approach from the front side of the side plate 86 toward the specific parts SP1 and SP2. Thus, the opening flange 89 formed on the outer circumference of the returnable box 80 prevents the approach from being obstructed. After reaching the specific part SP1 and SP2, the tip portions 43a and 52a are oriented toward the entrance space 91a of the card holder 91. Along with this orientation, the tip portions 43a and 52a are moved so that the orientation of the card chucking device 41, 51 is changed and the tip portions 43a and 52a are aligned with the side plate 86. In other words, tip portions 43a and 52a approach entrance space 91a.

The specific parts SP1 and SP2 continue (is contiguous) to the entry space 91A. Therefore, by displacing tip portions 43a and 52a along the side plate 86, the plates 43 and 52 can be prevented from deviating from the route toward the entrance space 91a. The posture of the card chucking devices 41 and 51 are then changed so that the tip portions 43a and 52a face the side of the entrance space 91a. This prevents the movement of the plates 43 and 52 from being obstructed by the card holder 91. Such movement enables the plates 43 and 52 to be inserted from the entrance space 91a to the interspace 95. When inserting the card CA, the card CA can be passed to the card holder 91 by releasing the card CA from being retained after the insertion of the plates 43 and 52. When removing the card CA, the card CA2 can be received from the card holder 91 by retaining the card CA2 after the insertion of the plate 52. This configuration can realize automation of the insertion/removal of the card CA to/from the card holder 91, and can contribute to efficiency and manpower saving in logistics processes where the returnable box 80 with the card holder 91 is used.

In the conventional configuration for automatically inserting a card CA into a card holder as described above, the card CA may be bent or crushed during the insertion. In such undesirable situations, it is assumed that not only the visibility of the card CA is reduced, but also it becomes difficult to remove the card CA. In addition, if the card CA protrudes from the tip portions 43a and 52a, the card CA is more likely to be deformed or snagged when the plates 42 and 53 move in the vicinity of the side plate 86 and card holder 91. This deformation or snagging may be a cause of the above-mentioned inconvenience.

Thus, as shown in the present embodiment, the configuration that enables the card CA to be held so that the card CA does not protrude from the tip portions 43a and 52a has technical significance.

If the interspace 95 formed between the card holder 91 and the side plate 86 is small, and if the tip portions 43a and 52a are moved along the side plate 86, there is a distance between the plates 43 and 52 (i.e., the tip portions 43a and 52a) and the side plate 86. The larger this distance is, the more difficult it becomes to approach interspace 95. Hence, as shown in the present embodiment, the plates 43 and 53 (i.e., the tip portions 43a and 52a) are configured to touch the side plate. This allows the second approach toward the entrance space 91a to be initiated in the state where the plates 43 and 52 and side plate 86 are in contact with each other, thereby contributing to improving the operational accuracy of the second approach. This is desirable in reducing the failure of insertion the plates 43 and 52. This effect is more pronounced as the distance between the specific parts SP1 and SP2 and the entrance space 91a becomes smaller.

When changing the inclination (i.e., the posture) of the card chucking devices 41 and 51 during the second approach, the card chucking devices 41 and 51 are rotated on the tip portions 43a and 52a. This rotation easily avoids the tip portions 43a and 52a from moving away from the side plate 86. This is desirable to reduce the complexity of control.

In order to smoothly insert the plates 43, 53 into the entrance space 91a of the card holder 91, it is preferable to make the inclination of the plates 43, 53 relative to the side plate 86 as small as possible (i.e., closer to be parallel to the side plate 86). However, the opening flange 89 is provided on the extension of the entrance space 91a. Thus, this opening flange 89 becomes an obstacle in tilting the plates 43 and 53. In other words, it is substantially difficult to displace the tip portions 43a and 52a toward the entrance space 91a after the plates 43 and 53 are sufficiently tilted. However, this point has been improved in the present embodiment. That is, in the second approach, as described, the posture change of the card chucking devices 41 and 51 and the displacement of tip portions 43a and 52a to the side of entrance space 91a are performed in parallel in timing. This parallel performance can reduce the influence of the opening flange 89. In the second approach, the posture of the card chucking device 41, 51 is configured to change while keeping the distance between the card chucking device 41 and 51 and the opening flange 89 (i.e., the tip EP) constant. Thus, the influence caused by the presence of the opening flange 89 can be further reduced.

Moreover, in the present embodiment, the returnable-box chucking device 31 and card chucking devices 41 and 51 are integrated in the one hand 30. Therefore, the transfer of the returnable box and the insertion of the card can be performed without changing the hand 30, or in other words, by simply turning the hand 30 around the sixth axis AX6 and changing the direction of the hand 30. Hence, work efficiency in the transfer process can be suitably improved. In particular, when transferring the returnable box 80 to the worktable TB, the returnable box is positioned so that the card holder 91 is right in front of the robot 11. This makes it possible to move directly to the insertion/removal of the card CA without having to turn the hand 30. This can suitably improve the work efficiency when transferring the returnable box 80 and inserting/ejecting the card CA by the one robot 11.

### <Second embodiment>

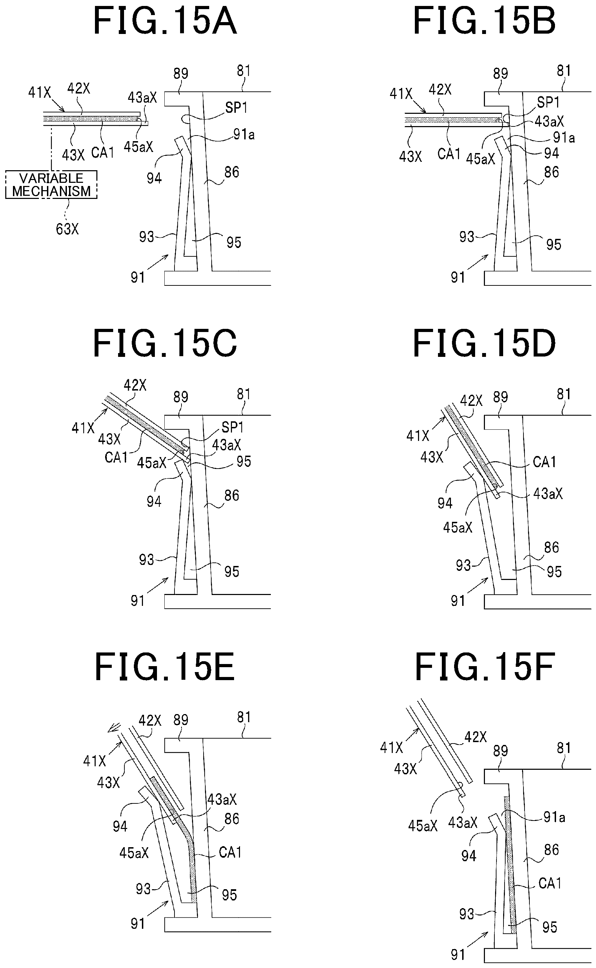

With reference to Figs. 15A to 15F, a second embodiment will now be described. In describing a system according to the second embodiment and its subsequent embodiment and modifications, the equivalent or similar components in the second embodiment will now be assigned to the same reference numbers as those used in the first embodiment, with a simplified explanation. This simplified explanation will also be adopted i

In the first chucking device 41 adopted by the first embodiment, the card CA1 housed between the pair of plates 42 and 43 (in the interspace 44) is pushed out by the chuck member 47 to transfer the card CA1 to card holder 91.

In contrast, the first chucking device shown in the second embodiment is configured to omit the chuck member 47 used in the first embodiment. With the omission of such a chuck member, the configuration for retaining the card CA1 is also changed. With reference to Fig. 15, the first chucking device 41X in this embodiment will now be described below, focusing on the differences from the first chucking device 41 shown in the first embodiment.

The first chucking device 41X is similar to the first chucking device 41 shown in the first embodiment in that an upper plate 42X and a lower plate 43X, which are separated by an interspace 44X, has a housing member 45X that houses the card CA1. On the other hand, the first chucking device 41X is provided with a variable mechanism 63X to change a distance between the two plates 42X and 43X, or the size of the interspace 44X. In this respect, the configuration differs from that of the first chucking device 41.

Specifically, the lower plate 43X can be displaced in an alignment direction of both the plates 42X and 43X (in the same direction as the central axis CL shown in Fig. 6). Hence, by displacing the lower plate 43X in the alignment direction, the state of the housing member 45X can be switched between its closed state and its open state, as described below. The closed state means that the interspace 44X has a size smaller than the thickness of card CA1. In contrast, the open state means that interspace 44X has a size larger than the thickness of card CA1.

The housing member 45X switches from the open state to the closed state when the card CA1 is picked up from the card storage area. As a result, the card CA1 is held by the plates 42X and 43X, whereby the card CA1 is prevented from falling out. To insert the card CA1 into the card holder 91, a tip portion 43aX of the lower plate 43X is made to face the specific part SP1 of the side plate 86. In this state, the first chucking device 41X is placed at an insertion waiting position located in front of the side plate 86 (see Fig. 15A). After placing the first chucking device 41X at the insertion waiting position, the first chucking device 41X is moved horizontally while maintaining the posture of the first chucking device 41X. This movement brings the tip portion 43aX of the lower plate 43X into contact with the side plate 86 (i.e., the specific part SP1) (see Fig. 15B).

After contacting the specific part SP1, the tip portion 43aX is displaced downward along the side plate 86 and moved so that its inclination with respect to the side plate 86 becomes smaller. In other words, the posture of the first chucking device 41X changes such that the inclination of the first chucking device 41X with respect to the horizontal plane increases (see Fig. 15C). When the tip portion 43aX is inserted into the entrance space 91a to the interspace 95, the operations afterwards are different from those of the first embodiment described already. Specifically, when the angle of the first chucking device 41X with respect to the side plate 86 reaches a predetermined angle (e.g., 45°), the posture of the first chucking device 41X changes (rotates) to separate the tip portion 43aX from the side plate 86 (see Fig. 15D). This provides a drop path for the card CA1 from the outlet 45aX of the housing member 45X to the bottom of the card holder 91.

Thereafter, when the tip portion 43aX reaches an insertion completion position, which is set at a position midway between the entrance space 91a and the bottom of card holder 91, the first chucking device 41X is stopped from moving. In addition, the housing member 45X is switched from the closed state to the open state (see Fig. 15E). As a result, the stored card CA1 falls along the lower plate 43X due to its own weight. When switching from the closed state to the open state, the first chucking device 41X is detached from the card holder 91 (see Fig. 15F).

### <Third embodiment>

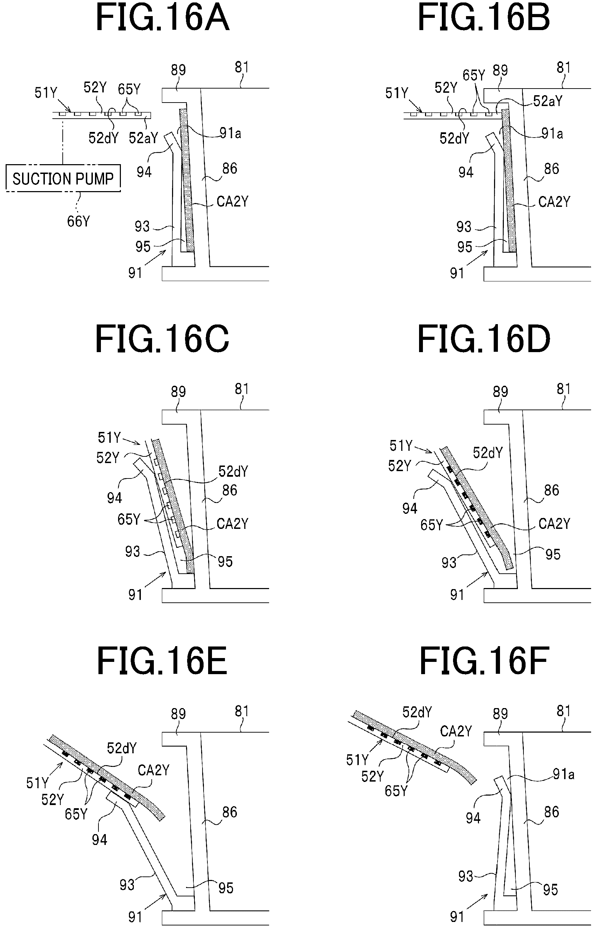

With reference to Fig. 16, a third embodiment of the system according to the disclosure will now be described.

In the first embodiment described before, the plate 52 of the second chucking device 51 is inserted the space formed between the card CA2 placed in the card holder 91 and the side plate 86 of the returnable box 80. However, it is assumed that there is a case in which the size of the card is so large that the card protrudes from the entrance space 91a of the card holder 91 towards the opening flange 89. In such a case, it may be difficult to insert the plate 52 into the space formed between the card and the side plate 86, which, of course, depends on a positional relationship between the opening flange 89 and the entrance space 91a. One of the features of the present embodiment is that it is devised to take such circumstances into account. The following is a description of the characteristic configuration in the present embodiment with reference to Fig. 16, focusing on the differences from the first embodiment.

A card CA2Y employed in the present embodiment protrudes above the entrance space 91a of the card holder 91, and the edge portion of the card CA2Y is close to the opening flange 89 of the returnable box 80. In the card insertion process into the returnable box 80, a second chucking device 51Y is first placed in the removal preparation position which is set in front of the side plate 86, as in the first embodiment (see Fig. 16A). Specifically, the posture of the robot body 20 (see Fig. 1 or other drawings) is changed so that the second chucking device 51Y is horizontally positioned and a tip portion 52aY of the plate 52Y faces the side plate 86 of the returnable box 80. In this state, the protruding portion of the card CA2Y is located at the tip of the tip portion 52aY (on the extension of the plate 52Y).

For the second chucking device 51Y, various configurations such as chuck member 54 and ejector 57 shown in the first embodiment (various configurations mounted on the lower surface side of plate 52) are omitted from being drawn.

There is a supplementary explanation of the configuration for holding a card CA2Y by the second chucking device 51Y. The plate 52Y has a plurality of pores 65Y which hare open to an upper surface 52DY, and these pores 65Y are connected to a suction pump 66Y. When the suction pump 66Y is activated, air is sucked through the pores 65Y, and an object which is in contact or proximity to the upper surface 52DY is adsorbed. In other words, in the present embodiment, the upper surface 52dY of the plate 52Y serves as a suction surface that adsorbs the card CA2Y.

After the placement in the removal preparation position, the second chucking device 51Y is moved horizontally while maintaining the posture of the second chucking device 51Y. As a result of this movement, the tip portion 52aY of the plate 52Y is brought into contact with the card CA2Y (see Fig. 14B). This differs from the first embodiment in that the plate 52Y contacts the card CA2Y instead of the side plate 86.

The posture of robot body 20 is then changed so that the inclination of the plate 52Y with respect to the side plate 86 is reduced while the tip portion 52aY of plate 52Y is displaced downward along the side plate 86 (i.e., in a parallel direction to the side plate 86). In this process, the plate 52Y is inserted into the entrance space 91a of the card holder 91, specifically a space formed between the holding portion 93 of the card holder 91 and the card CA2Y. In other words, the plate 52Y of the second chucking device 51Y is pinched between the holding portion 93 of the card holder 91 and the card CA2Y (see Fig. 16C). Since the side plate 86 is slightly inclined toward the outside of the returnable box 80, the card CA2Y, which has lost its support by the holding portion 93 in the foregoing process, can easily lean against the plate 52Y.

When reaching the target position, the suction pump 66Y (see Fig. 16A) is activated, and the card CA2Y is sucked onto the plate 52Y. When the suction pump 66Y has been activated, the posture of robot body 20 is first changed so that the inclination of the plate 52Y with respect to the side plate 86 is increased, i.e., the inclination of the plate 52Y with respect to the horizontal plane is decreased (see Fig. 16D). This is a device to prevent the card CA2Y from slipping down. Thereafter, the second chucking device 51Y is raised while the suction pump 66Y is activated, and the posture of the robot body 20 is changed so that the inclination of the robot body 20 with respect to the side plate 86 is further increased (see Fig. 16E). As a result, the card CA2Y is detached from the card holder 91 while being held by the second chucking device 51Y (see Fig. 16F).

### < Modifications>

The contents of each of the foregoing embodiments are not limited to those described already, but may be implemented, for example, as follows. Incidentally, each of the following configurations may be applied to each of the foregoing embodiments individually, or may be applied to each of the foregoing embodiments in part or in whole in combination.

### • First modification

In the case of insertion/removal of a card CA, a variant of the second approach in inserting the plates 43, 52 of the card chucking devices 41, 51 into the entrance space 91a of the card holder 91 is described here.

The displacement (descent) of the tip portions 43a and 52a of the plates 43, 52 toward the entrance space 91a and the posture change (rotation) of the plates 43 and 52 do not necessarily have to be performed simultaneously. For example, the posture of the arm 21 may be controlled so that the tip portions 43a and 52a are displaced toward the entrance space 91a after the posture change is performed.

### • Second modification

In the first embodiment, after the plates 43 and 52 of the card chucking devices 41 and 51 are brought into contact with the side plate 86 of the returnable box 80 upon insertion/removal of the card CA, the plates 42a and 52a of the plates 43 and 52 are displaced in a preprogrammed path. However, this is just an example.

Instead, for example, the presence or absence of a reaction force from the side plate 86 can be monitored based on information (feedback) from the torque sensors 73, and the tip portions 43a and 52a can be displaced while adjusting to maintain the state in which the reaction force is generated. This also prevents the tip portions 43a and 52a from separating from the side plate 86 in a reliable manner. The target trajectory through which the tip portions 43a and 52a pass may be set slightly inward (toward the center of the returnable box 80) from the outer surface of the side plate 86. By setting such a target trajectory, the tip portions 43a and 52a will be pressed against the side plate 86 by the movement of the arm 21.

Incidentally, it is possible to absorb a gap caused between the outer surface to be contacted and the target trajectory, by slightly bending of the plates 43 and 52.

### • Third modification

In the first embodiment, the upper plate 42 and the lower plate 43 of the first chucking device 41 both are formed to be flat.

Instead, it is sufficient if the card CA1 stored in the interspace 44 of both the plates 42 and 43 is configured to be ejectable by the ejector 46. It is also possible, for example, to make both the plates 42 and 43 curved.

Alternatively, the plate 52 of the second chucking device 51 may also be curved, as long as the tip portion 52a of the plate 52 can avoid floating of the card CA2.

### • Fourth modification

In each of the foregoing embodiments, the first and second chucking devices 41 and 51 are arranged so that they protrude from the long side 32a of the base plate 32, but they are not limited to such configuration.

For example, the first and second chucking devices 41 and 51 can be arranged to protrude from the short side 32b of the base plate 32.

However, when the posture of the arm 21 is changed to tilt the hand 30 for insertion/removal of the card CA, a distance from the shaft portion 33 to the tip of the first chucking device 41 and/or a distance from the shaft portion 33 to the tip of the second chucking device 51 may become larger. In such cases, the hand 30 and arm 21 are more likely to interfere with each other.

It is desirable to tilt the first chucking device 41 and the second chucking device 51 significantly to the horizontal plane when inserting/removal is performed. In view of this, it is technically significant to place the first chucking device 41 and the second chucking device 51 on the long side 32a of the base plate 32, as shown in the embodiments.

By way of example, the first and second chucking devices 41 and 51 are arranged separately from each other such that the first chucking device 41 protrudes from one of the two long sides 32a, while the second chucking device 51 protrudes from the other of the two long sides 32a. Instead of this arrangement, it is also possible to arrange the first and second chucking devices 41 and 51 to protrude from the same one long side 32a.

### • Fifth modification

In the foregoing embodiments, the case in which the entrance space 91a of the card holder 91 is facing upward is illustrated. Instead, even if the entrance space of the card holder is facing sideways, the card can be inserted/removed by the conveying system 10.

### • Sixth modification

In the second embodiment, the gap between the plates 42X and 43X is expanded/reduced by displacing the lower plate 43X in the direction along which the plates 42X and 43X are aligned.

Alternatively, the upper plate 42X may be configured to expand/contract the gap between the plates 42X and 43X by displacing the upper plate 42X in the direction along which the plates 42X and 43X are aligned.

It may also be configured to expand/contract the distance formed between the two plates 42X and 43X by displacing the respective plates 42X and 43X.

### • Seventh modification

The configuration for realizing the movements during insertion and ejection of the card CA shown in the above embodiments is not limited to the aforementioned configurations, but can be implemented in various ways.

For example, the movement of the robot 11 when inserting or removing a card CA can be configured to execute the movement (control points, etc.) stored in the memory section of the robot controller 70 without considering the actual positions of the card holder 91, the opening flange 89, and/or other components.

The positions of the card holder 91 and opening flange 89 of the returnable box 80 may be confirmed from imaged taken by the camera 61, and such confirmed information may be used for correction. For example, the position of the card holder 91 and the position of the opening flange 89 are determined using the confirmation information. Based on this determined position, the insertion waiting position required when inserting the card CA, the removal preparation position required when removing the card CA, and/or the positions of the specific parts SP1 and SP2 may be corrected using a known technique.

### • Eighth modification

In the conveying system 10 shown in the foregoing various embodiments, the case in which the robot 11 is engaged in the three tasks of conveying the returnable box 80 and inserting/removing the card CA is shown as just examples. Alternately, there can be prepared three robots of a robot transporting the returnable box 80, a robot engaged in inserting the card CA, and a robot engaged in removing the card CA.

### • Ninth modification

In each of the foregoing embodiments, a 6-axis vertical articulated robot is used to provide the conveying system 10 (functioning as the card insertion system). An alternative configuration is to provide a conveying system which uses other articulated robots with 3 to 5, 7, or other axes.

A horizontal articulated robot may be used instead of the vertical articulated robot to provide a conveying system.

The specific configurations for moving the configurations corresponding to the first and second chucking devices 41 and 51 can be provided by arbitrary components, and not necessarily limited to the robot 11 described in the foregoing. For example, instead of the robot 11, a dedicated moving facility for moving the configuration corresponding to the first chucking device 41 or the second chucking device 51 may be installed.

### <Group of inventions extracted from the embodiments>

The features of the inventions extracted from the foregoing embodiments will now be explained below, showing effects, etc., as necessary. For ease of understanding, the corresponding configurations in the foregoing embodiments are shown below in parentheses, etc., as appropriate, but are not limited to the specific configurations shown in these parentheses, etc.

### <A-group features: Card insertion>

The following feature group A solves the problem derived from the background technology described below.

### 1. Background Technology

i) In logistics processes at factories, etc., the efficiency of logistics processes can be improved by placing cards with information on goods and transportation about returnable boxes used for transportation of goods, and by using the cards to manage the distribution of goods, thereby improving the efficiency of logistics processes.
ii) For example, in Patent Document 1, a technology is proposed to automatically insert identification cards into beer cases flowing on a conveyor belt, through the opening of the beer cases. The introduction of such a technology can contribute to labor saving in logistics processes.
iii) Some of the above-mentioned returnable boxes are provided with a card holder to hold the card.

### 2. Problem to be solved

This type of card holder is often installed outside the returnable box to facilitate visual confirmation of the card. In recent years, technologies have also been proposed that make it possible to easily obtain card information by mechanically reading bar codes, QR codes (registered trademarks), and the like attached to the card, thus making it technically significant to place the card outside the returnable box.

However, in logistics processes where a returnable box with a card holder is used, the insertion of the card into the card holder is still done manually by the operator.

Thus, there is still room for improvement in the configuration related to card insertion in order to increase efficiency and reduce manpower in logistics processes where returnable boxes with card holders are used.

### Feature A1:

A feature A1, which is provided due to the foregoing background, provides a card insertion system (in the embodiment, the conveying system 10) provided with a storage box (in the embodiments, the returnable box 80) having a wall a part of which outer surface is provided as a side wall portion (an outer surface of the side plate 86)and a card holder (the card holder 91) installed on the side wall portion with an interspace (the interspace 95) formed therebetween, the card (the card CA) being allowed to be inserted into the interspace and providing information thereon showing how to handle either the storage box or objects being stored in the storage box,
wherein the card insertion system comprises
a card supporting member (the card chucking devices 41,51) provided with a plate (the plates 43, 52) insertable, the card supporting member supporting the card which is stacked on the plate;
a moving mechanism (the robot body 20) moving the card supporting member; and
a controller (the robot controller 70) controlling motions of both the card supporting member and the moving mechanism,
wherein the controller is adapted to perform first, second, and third control means, wherein
the first control means control the moving mechanism such that the card supporting member is moved to a specific part (the specific parts SP1, SP2) lead to an entrance space (the entrance space 91a) to the interspace on the side wall portion when a predetermined edge portion (tip portions 43a, 52a) of the plate is directed toward the specific part;
the second control means control the moving mechanism such that a posture of the card supporting member is changed to direct the predetermined edge portion toward the entrance space and the predetermined edge portion directed toward the entrance space on the side wall portion when reaching the specific part; and
the third control means control both of the moving mechanism and the card supporting member such that the card is released from being held when the plate has been inserted from the entrance space to the interspace.

As shown in this feature, as the first approach, the card supporting member is approached toward the specific part with the predetermined edge portion of the plate facing the specific part of the side wall portion. This prevents inconveniences such as the first approach being blocked by a convexity (e.g., the opening flange 89) formed on the outer surface of the storage box, for example.

When reaching the specific part, as the second approach, the orientation of the card supporting member is changed so that the predetermined edge portion faces the entrance side and the predetermined edge portion approaches the entrance along the side wall portion. The specific part continues to the entrance, and by displacing the predetermined edge portion along the side wall portion, the plate is prevented from deviating from the route toward the entrance.

The posture of the card supporting member (plate) is then changed so that the predetermined edge portion faces the entrance side. This prevents the card holder from interfering with the plate movement. This movement allows the plate to be inserted from the entrance into the interspace above. After the plate has been inserted, the card can be passed to the card holder by releasing the card.

Such a configuration will automate the insertion of the card into the card holder, and will contribute to the efficiency and labor saving of logistics processes in which returnable boxes with card holders are used.

### Feature A2:

A feature A2 provides the card insertion system according to feature 1, wherein the card supporting member is capable of holding the card so that the card does not protrude from the predetermined edge portion.

In the case of automatic card insertion as shown in feature A1, it is assumed that if the card is bent or crushed, not only will the visibility of the card be reduced, but it will also be difficult to remove the card. If the card protrudes from the predetermined edge portion, the card is likely to be deformed or caught when the plate moves in the vicinity of the side wall portion or card holder.
This is a cause of the above-mentioned inconvenience. Thus, it is technically significant to make it possible to hold said card by preventing the card from protruding from the predetermined edge portion as shown in the present feature.

### Feature A3:

A feature A3 provides the card insertion system according to feature 1 or 2, comprising a detector (the torque sensor 73) capable of detecting that the plate has hit said side wall portion,
wherein
the controller is adapted to control the moving mechanism to terminate movement of the plate toward the specific part, based on detection information detected by the detector.

When the interspace between the card holder and the side wall portion is small, as the distance between the plate (predetermined edge portion) and the side wall portion becomes larger (when moving the predetermined edge portion along the side wall portion), it becomes more difficult to approach the interspace. Therefore, as shown in this feature, if the plate (predetermined edge portion) is placed against the side wall portion, the second approach can be started with the plate and side wall portion in contact with each other, which contributes to improving the accuracy of the second approach. This contributes to improving the accuracy of the second approach. This is desirable to reduce the chance of plate insertion failure. It is preferable that the edge portion and the side wall portion remain in contact during the second approach.

### Feature A4:

A feature A4 provides the card insertion system according to any one of features A1 to A3, wherein
the second control means is adapted to control the moving mechanism such that the card supporting member rotates on the predetermined edge portion, thereby changing the pose of the card supporting member.

By rotating the card supporting member on the predetermined edge portion, it is simple to avoid moving the predetermined edge portion away from the side wall portion due to rotation. This is desirable to reduce the complexity of control.

### Feature A5:

A feature A5 provides the card insertion system according to any one of the features A1 to A4, wherein
the controller is adapted to control the moving mechanism such that a posture of the card supporting member is changed to direct the predetermined edge portion toward the entrance space and the predetermined edge portion directed toward the entrance space on the side wall portion when reaching the specific part.

For smooth insertion of the plate, it is desirable to make the inclination of the plate to the side wall portion as small as possible. However, as mentioned, the outer surface of a returnable box often has a convexity, and if the convexity is located near a specific part, the convexity can be an obstacle in tilting the plate. In other words, it may be substantially difficult to displace a predetermined edge portion to the entrance side after the plate is sufficiently tilted. In this respect, as in this feature, in the second approach, the posture change of the card supporting member and the displacement of the predetermined edge portion to the entrance side are performed in parallel. As a result, even if a convexity is located in the vicinity of the specific part, the effect of the tilt restriction by the convexity can be suitably mitigated.

### Feature A6:

A feature A6 provides the card insertion system according to any one of the features A1 to A5, wherein
the side wall portion has a protrusion (the opening flange 89) formed thereon so as to be opposed to the card holder via the specific part located between the card holder and the production, and
the second control means is adapted to control the moving mechanism such that the pose of the card supporting member is changed with a distant between the plate and the protrusion is constat or substantially constant.

According to the configuration shown in this feature, the inclination of the plate relative to the side wall portion can be minimized while taking into consideration the limitations imposed by the protruding portion.

The term of "a distant between the plate and the protrusion is constat or substantially constant" takes into account the fact that the distance may vary due to the effect of errors when the pre-assumed position of the protrusion and the actual position of the protrusion are different, etc. Also, when the movement is determined by image analysis, etc., the distance may vary depending on the accuracy of the image analysis, etc., due to the effect of the accuracy. These considerations allow for a certain degree of allowance.

### Feature A7:

A feature A7 provides the card insertion system according to any one of the features A1 to A6, comprising an ejector (the ejectors 46, 57) which ejects the card from the card supporting member,
wherein the controller is adapted to control both of the moving mechanism and the card supporting member so as to release the card from being supported, when the plate has been moved to a back part of the interspace; and
control both of the ejector and the moving mechanism so as to enable, in parallel, i) the ejector to perform an ejecting action for the card and ii) the moving mechanism to perform a release operation of the card supporting member to release the card from the card holder, when the card has been released from being held.

The use of an ejector to forcibly eject a card is desirable to avoid the card remaining on the card supporting member side. On the other hand, if a card is forcibly ejected with the card supporting member inserted into the back part of the interspace, the card may become bent or distorted. There is concern that such deformation will reduce the visibility of the card.

In this regard, as shown in this feature, after releasing the card retention, the ejecting action of the card and the release operation of the card supporting member are performed in parallel. This eases the load on the card at the time of ejection and suppresses card deformation.

### Feature A8:

A feature A8 provides the card insertion system according to any one of the features A1 to A7, wherein the plate is composed of a first plate,
the card supporting member is provided with a second plate (the upper plate 42), which is opposite to the first plate via an interspace (the interspace 44) and is inserted into the interspace together with the first plate, and
the card is accommodated in the interspace formed between the first plate and the second plate.

When the first plate is inserted into the interspace formed between the card holder and the side wall portion, the card can be distorted or flexed away from the first plate, causing the card to get caught or wound up in the card holder. In this respect, if the card is accommodated in the interspace of the two opposing plates, distortion or bending of the card can be suppressed and card insertion errors can be reduced.

Meanwhile when a predetermined tip portion of the card supporting member is facing toward the entrance side along the side wall portion, the predetermined tip portion should not be separated from the side wall portion as much as possible. For this purpose, it is preferable to configure the card supporting member as "the first plate has a portion thereof extending from the portion opposite to the second plate, and the tip of the extending portion constitutes the predetermined edge portion".

For example, the length (width) of the first plate and the second plate may be different from each other, or the first plate and the second plate may be arranged by mutually shifting them in the width direction.

### Feature A9:

A feature A9 provides the card insertion system according to the feature A8, wherein,
in a state where the card is inserted into the interspace, the first plate faces toward the card holder and the second plate faces toward the side wall portion, and
the first plate extends from the edge portion of the second plate on the predetermined edge portion.

In this feature, the position of the edge portion of the first plate is shifted from the position of the edge portion of the second plate.

This is advantageous when moving the predetermined edge portion of the first plate closer to the entrance along the side wall portion. Practically, it is easy to prevent the second plate from hitting the side wall portion and preventing the card supporting member from changing its posture, i.e., moving the predetermined edge portion of the first plate away from the side wall portion. The second plate can be easily suppressed.

### Feature A10:

A feature A10 provides the card insertion system according to any one of features A1 to A9, wherein the moving mechanism is an arm of a robot, and the card supporting member is attached to the arm.

According to the configuration shown in this feature, the card supporting member can be moved and its posture can be changed by the arm of the robot.

### Feature A11:

A feature A11 provides the card insertion system according to feature A10, wherein
the arm has joints in which a torque sensor (the torque sensor 73) is installed to detect toque generated at the respective joints, and, when the controller moves the card supporting member toward the specific part, the controller determines whether the card supporting member hits the side wall portion based on information from the torque sensor.

If the configuration is designed to determine whether the card supporting member hits the side wall portion based on the information from the torque sensor installed on the arm, the configuration of the card supporting member can be avoided from becoming complicated. For example, even if an end effector is constructed by combining multiple card supporting members to accommodate multiple types of cards, there is no need to install sensors (e.g., proximity sensors, pressure sensors, etc.) to monitor each individual card supporting member.

### <B-group features: Card removal>

The following feature group B solves the problem derived from the background technology described below.

### 1. Background Technology

A feature B group below states that "in logistics processes, cards with information on goods and their transportation are placed in returnable boxes used for transporting the goods, and the distribution of the goods is managed by using the cards, thereby improving the efficiency of logistics processes. Some of the above-mentioned returnable boxes are equipped with a card holder to hold a card therein. This type of card holder is often installed outside the returnable box to ensure visibility of the card. For example, in Patent Document 1 (JP-A-07-275825), a technology is proposed to release labels from the pockets of containers flowing on a conveyor belt. Specifically, it describes a configuration in which a vacuum nozzle sucks a label and then releases the label from the pocket by rotating the vacuum nozzle.

### 2. Problem to be solved

According to this technology, the outer surface of the returnable box is not necessarily flat, but often has convex portions such as ribs and opening flanges for the purpose of reinforcement. Therefore, it is common for the card holder to have a certain amount of depth in order to prevent the card from falling out. In other words, it can be difficult to remove a deeply inserted card while avoiding the surrounding convexities. Thus, in logistics processes where returnable boxes with card holders are used, the removal of cards from the card holders is still done by hand. Thus, there is still room for improvement in the configuration related to card removal in logistics processes where returnable boxes with card holders are used, in order to increase efficiency and reduce manpower.

### Feature B1:

A feature B1, which is provided due to the foregoing background, provides a card removal system (in the embodiment, the conveying system 10) provided with a storage box (in the embodiments, the returnable box 80) having a wall with an outer surface a part of which is provided as a side wall portion (an outer surface of the side plate 86)and a card holder (the card holder 91) installed on the side wall portion with an interspace (the interspace 95) formed therebetween, a card (the card CA) i) being allowed to be removed from the interspace and ii) providing information thereon showing how to handle either the storage box or objects being stored in the storage box,
wherein the card removal system comprises
a card supporting member (the card chucking devices 51) provided with a plate (the plates 52) inserted when the card is removed from the interspace, the card supporting member supporting the card which is stacked on the plate;
a moving mechanism (the robot body 20) moving the card supporting member; and
a controller (the robot controller 70) controlling motions of both the card supporting member and the moving mechanism,
wherein the controller is adapted to
   control the moving mechanism such that i) the card supporting member is moved to a specific part (the specific parts SP2) lead to an entrance space (the entrance space 91a) to the interspace on the side wall portion when a predetermined edge portion (the tip portions 52a) of the plate is directed toward the specific part and ii) the predetermined edge portion is directed toward the entrance space by changing a posture of the card supporting member so as to enable the predetermined edge portion to be directed toward the entrance space along the side wall portion, when the card supporting member is prevented from moving the side wall portion; and
   control both of the card supporting member and the moving mechanism such that the card placed in the interspace after being inserted in the interspace via the entrance space is supported and, with the card supported in the interspace, the plate is released from the interspace.

As described in this feature, the card supporting member is approached toward the specific part with the predetermined edge portion of the plate facing the specific part of the side wall portion (a first approach). This prevents inconveniences such as the first approach being obstructed by a convex portion (e.g., the opening flange 89) formed on the outer surface of the storage box.

When further movement is prevented by the side wall portion, a second approach is performed. Practically, in the second approach, the orientation of the card supporting member changes so that the predetermined edge portion of the plate faces the entrance side, and in parallel with this change, the predetermined edge portion approaches the entrance space along the side wall portion. The orientation of the card supporting member (plate) is then changed so that the predetermined edge portion faces the entrance space. This prevents the card holder from interfering with movement of the plate.

This movement allows the plate to Insertion from the inlet into the interspace above. After the insertion of the plate, the card is retained and the plate is released from the interspace with the card retained. Such a configuration will automate the removal of the card from the card holder, and will contribute to the efficiency and manpower saving of logistics processes in which returnable boxes with card holders are used.

### Feature B2:

A feature B2 provides the card removal system according to feature B1, comprising a protrusion (the opening flange 89) which is opposed to the card holder via the specific part on the side wall portion, wherein the specific part is set to positionally be in the vicinity of the production on the side wall portion.

The amount of protrusion from the card holder may vary depending on the type and position of the card. When such a protrusion facing the card holder is formed with a specific part in between, the side wall portion near the protrusion should be made into a specific part. This makes it easier to insert the plate between the card and the side wall portion.

### Feature B3:

A feature B3 provides the card removal system according to feature B1 or B2, wherein the controller is adapted to control the moving mechanism in a manner that contact of the predetermined edge portion to the side wall portion is held when the predetermined edge portion of the plate is moved toward the entrance space.

Hence, according to this configuration, the plate can be held on the side wall portion without being departed therefrom during moving of the plate into the entrance space. It is thus desirable in inserting the plate into a space formed between the side wall portion and the card.

### Feature B4:

A feature B4 provides the card removal system according to any one of features B1 to B3, wherein the moving mechanism is an arm (the arm 21) of a robot (the robot 11) and the card supporting member is attached to the arm.

In this feature, the arm of the robot can be controlled to move the card supporting member and change a posture of the card supporting member.

### <Partial reference signs list>

10...conveying system,
11...robot (industrial robot)
20...robot body,
30 ... hand
32...base plate
41...first chucking device (functioning as chucking device for cards)
42...upper plate
43...lower plate
44...interspace
45...housing member
46...ejector
47...chuck member
51...second chucking device(functioning as chucking device for cards)
52...plate
54...chuck member
57...ejector
58...extrusion member
70...robot controller
73...torque sensor
80...returnable box
89...opening flange
91...card holder
91a...entrance space
93...holding portion
94...tip portion
95...interspace

## Claims

1. A card insertion system provided with a storage box having a wall with an outer surface a part of which is provided as a side wall portion and a card holder installed on the side wall portion with an interspace formed therebetween, the card i) being allowed to be inserted into the interspace and ii) providing information thereon showing how to handle either the storage box or objects being stored in the storage box,
wherein the card insertion system comprises
a card supporting member provided with a plate insertable, the card supporting member supporting the card which is stacked on the plate;
a moving mechanism moving the card supporting member; and a controller controlling motions of both the card supporting member and the moving mechanism,
wherein the controller is adapted to perform first, second, and third control means, wherein
the first control means control the moving mechanism such that the card supporting member is moved to a specific part which is lead to an entrance space of the interspace on the side wall portion when a predetermined edge portion of the plate is directed toward the specific part;
the second control means control the moving mechanism such that a posture of the card supporting member is changed to direct the predetermined edge portion toward the entrance space and the predetermined edge portion directed toward the entrance space on the side wall portion when reaching the specific part; and
the third control means control both of the moving mechanism and the card supporting member such that the card is released from being held when the plate has been inserted from the entrance space to the interspace.

2. The card insertion system according to claim 1, wherein the second control means is adapted to control the moving mechanism such that the card supporting member rotates on the predetermined edge portion, thereby changing the pose of the card supporting member.

3. The card insertion system according to claim 1, wherein the side wall portion has a protrusion formed thereon so as to be opposed to the card holder via the specific part located between the card holder and the production, and
the second control means is adapted to control the moving mechanism such that the pose of the card supporting member is changed with a distant between the plate and the protrusion is constat or substantially constant.

4. The card insertion system according to claim 1, comprising an ejector which ejects the card from the card supporting member,
wherein the controller is adapted to control both of the moving mechanism and the card supporting member so as to release the card from being supported, when the plate has been moved to a back part of the interspace; and
control both of the ejector and the moving mechanism so as to enable, in parallel, i) the ejector to perform an ejecting action for the card and ii) the moving mechanism to perform a release operation of the card supporting member to release the card from the card holder, when the card has been released from being held.

5. A card removal system (in the embodiment, the conveying system 10) provided with a storage box (in the embodiments, the returnable box 80) having a wall with an outer surface a part of which is provided as a side wall portion (an outer surface of the side plate86)and a card holder (the card holder 91) installed on the side wall portion with an interspace (the interspace 95) formed therebetween, a card (the card CA) i) being allowed to be removed from the interspace and ii) providing information thereon showing how to handle either the storage box or objects being stored in the storage box,
wherein the card removal system comprises
a card supporting member (the card chucking devices 51) provided with a plate (the plates 52) inserted when the card is removed from the interspace, the card supporting member supporting the card which is stacked on the plate;
a moving mechanism (the robot body 20) moving the card supporting member; and
a controller (the robot controller 70) controlling motions of both the card supporting member and the moving mechanism,
wherein the controller is adapted to
control the moving mechanism such that i) the card supporting member is moved to a specific part (the specific parts SP2) lead to an entrance space (the entrance space 91a) to the interspace on the side wall portion when a predetermined edge portion (the tip portions 52a) of the plate is directed toward the specific part and ii) the predetermined edge portion is directed toward the entrance space by changing a posture of the card supporting member so as to enable the predetermined edge portion to be directed toward the entrance space along the side wall portion, when the card supporting member is prevented from moving the side wall portion; and
control both of the card supporting member and the moving mechanism such that the card placed in the interspace after being inserted in the interspace via the entrance space is supported and, with the card supported in the interspace, the plate is released from the interspace.

6. The card insertion system according to any one of claims 1 to 5, wherein the moving mechanism is an arm of a robot, and the card supporting member is attached to the arm.
